## Europäisches Patentamt
## European Patent Office
## Office européen des brevets

(11) Veröffentlichungsnummer: **0 208 654**
**B1**

(12) **EUROPÄISCHE PATENTSCHRIFT**

(45) Veröffentlichungstag der Patentschrift:
**05.10.88**

(51) Int. Cl.⁴: **B 29 C 45/02, B 29 C 45/26, B 29 C 45/73**

(21) Anmeldenummer: **86810297.1**

(22) Anmeldetag: **07.07.86**

(54) **Reaktionsspritzpressverfahren und Vorrichtung zur Herstellung von Formkörpern aus Duroplasten, die gegebenenfalls Füllstoffe und/oder Verstärkungsmaterialien enthalten.**

(30) Priorität: **11.07.85 CH 3002/85**

(43) Veröffentlichungstag der Anmeldung:
**14.01.87 Patentblatt 87/3**

(45) Bekanntmachung des Hinweises auf die Patenterteilung:
**05.10.88 Patentblatt 88/40**

(84) Benannte Vertragsstaaten:
**AT BE CH DE FR GB IT LI NL SE**

(56) Entgegenhaltungen:
**EP - A - 0 068 615**
**EP - A - 0 124 244**
**DE - A - 2 362 934**
**DE - A - 3 325 828**
**DE - B - 1 263 276**
**DE - B - 2 525 437**
**GB - A - 2 007 578**
**US - A - 3 356 781**
**US - A - 4 338 068**

**Modern Plastics International, Band 13, Nr. 11, November 1983, McGraw-Hill, Lausanne, CH, "RIM urethane system can be filled and reinforced" und "Low-viscosity, fast reacting monomer for RIM", Seite 58**

(73) Patentinhaber: **CIBA-GEIGY AG, Klybeckstrasse 141, CH-4002 Basel (CH)**

(72) Erfinder: **Diethelm, Hermann, Dr., Grottenweg, CH-1711 Giffers (CH)**
Erfinder: **Dresen, Wolfgang, Alte Bernstrasse 86, CH-3075 Rüfenacht (CH)**

**Beschreibung**

Die Erfindung betrifft ein Reaktionsspritzpressverfahren gemäss dem Oberbegriff des Patentanspruchs 1 und eine Vorrichtung zur Durchführung dieses Verfahrens gemäss dem Oberbegriff des Patentanspruchs 11.

Es ist bekannt, duroplastische Kunststoffe, die auch als Duromere bezeichnet werden, z.B. Harnstoff-Formaldehyd-Harze (UF), Melamin-Formaldehyd-Harze (Melaminharze, MF) Phenol-Formaldehyd-Harze (Phenolharze, PF), Epoxidharze (EP), sowie ungesättigte Polyesterharze (UP), wie solche aus Diallylphthalat (DAP), durch Spritzguss zu Formkörpern zu verarbeiten (vgl. z.B. Encyclopedia of Polymer Science and Technology, Vol. 9, Verlag John Wiley, New York; Seiten 47-83). Duroplaste werden bekanntlich aus sogenannten Reaktionsharzen durch irreversible Vernetzung gebildet. Reaktionsharze sind definiert als flüssige oder verflüssigbare Harze oder Stoffgemische, die für sich oder nach Zusatz von Reaktionsmitteln (Härter, Beschleuniger u.a.) durch Polymerisation bzw. Polykondensation oder Polyaddition härten. Man geht beim Spritzgiessen und Pressen von Duroplasten in der Regel von Addukten aus Harz und Härter oder von vorreagierten Harzen aus; dadurch wird weniger Energie frei, die abgeführt werden muss, und ausserdem schwindet das formulierte Produkt weniger.

Ferner ist es z.B. aus Modern Plastics International, Band 13, Nov. 1983 bekannt, Integralschaumstoffe aus Polyurethan (PUR) mittels des Reaktionsspritzgussverfahrens (Reactive Liquid Injection Moulding, LIM) herzustellen. Bei diesem Verfahren werden grosse Mengen eines Mehrkomponentensystems nach dem Turbulenzmischverfahren schnell dosiert und vermischt, und das Reaktionsgemisch wird in den Werkzeughohlraum injiziert und unter dem Druck des freiwerdenden Schäumgases zum Formkörper ausgehärtet.

Reaktionsharze, insbesondere Epoxidharze, lassen sich auch nach dem Reaktionsspritzgussverfahren verarbeiten, wenn sie monomer oder höchstens oligomer sind. Unter Oligomeren versteht man bekanntlich niedermolekulare Polymere mit einer molanen Masse von $10^2$ bis $10^4$. In Monomeren oder Oligomeren ist jedoch viel Luft gelöst. Daher ist es schwierig, ohne Entlüftung völlig luftfreie Formkörper aus reinen Duroplasten oder aus Füllstoffen oder Verstärkungsmaterialien enthaltenden Duroplasten herzustellen.

Die bei den bekannten Spritzgussverfahren verwendeten Formen bestehen, wenn z.B. flache Scheiben oder Platten, z.B. Schallplattenkörper, hergestellt werden sollen, gewöhnlich aus zwei Formhälften, die beim dichten Zusammenfügen zwischen sich eine Reaktionskammer einschliessen, und es ist dabei üblich, die beiden Formhälften während des Härtungsvorganges der durch eine in der einen Formhälfte vorgesehenen Einspritzöffnung eingeführten Kunststoffmasse gleichmässig zu erhitzen (vgl. Encyclopedia of Polymer Science and Technology, Vol. 9, 1968; Seiten 158-181).

Durch Verwendung schwenkbarer Formenträger kann man allerdings die Formen in die günstigste Füll- und Entlüftungsposition bringen. Ferner kann man die Einfüllöffnung so anordnen und dimensionieren, dass keine Luft eingeschlossen wird und sich eine geeignete Füllgeschwindigkeit erzielen lässt. Trotzdem treten aber Schwierigkeiten auf, und es ist eine Entlüftung im Vakuum erforderlich.

Infolge des Verlustes an Volumen durch Schwund des Harzes bei der Härtungsreaktion (um ca. 1 bis 10%) können Oberflächenfehler auftreten, wie Einfallstellen und Schwundmarkierungen. Beim Reaktionsspritzgussverfahren von formulierten Duroplasten ist es meist nicht möglich, diese Fehler nur durch Bildung von Addukten aus Harz und Härter oder Vorreaktion des Harzes mindestens teilweise zu beseitigen, weil solche Addukte oder vorreagierte Harze bei Raumtemperatur höhere Viskositäten haben oder sogar fest sein können, was das Turbulenzmischverfahren erschwert. Ausserdem werden die Rohstoffkosten dadurch erhöht.

Ein weiterer Nachteil der bekannten Verfahren ist, dass die Massetemperaturen während der Härtungsreaktion durch Exothermie sehr erheblich ansteigen, was sogar zur Zersetzung der Formkörper führen kann, wenn nicht relativ niedrige Ausgangstemperaturen angewandt werden, die wiederum lange Reaktionszeiten zur Folge haben.

In der Praxis werden zur Hauptsache füllstoffhaltige und glasfaserverstärkte Formkörper, seltener von Füllstoffen und Verstärkungsmaterialien freie Formkörper hergestellt. Füllstoffhaltige Formkörper können bis zu 60 und mehr Gew.-% Füllstoff enthalten. Die Füllstoffe verdecken viele Mängel und haben einen günstigen Einfluss auf Reaktionsenthalpie und Schwund, da sie nicht an der Härtungsreaktion teilnehmen. Glasfaserverstärkte Formkörper haben viel gemeinsam mit von Füllstoffen und Verstärkungsmaterialien freien Formkörpern, weil sie durchsichtig sind und dadurch jeder Fehler in der Oberfläche oder auch im Innern des Formkörpers sofort erkannt werden kann. Um die Güte eines Formgebungsverfahrens zu beurteilen, sind daher von Füllstoffen und Verstärkungsmaterialien freie oder glasfaserverstärkte Formkörper besonders geeignet.

Es wurde nun festgestellt, dass die Schwierigkeiten, die bei Verwendung von Duroplasten im Spritzguss- bzw. Reaktionsspritzgussverfahren auftreten, dadurch bedingt sind, dass die Härtung des Harzes an der heissen Formoberfläche beginnt, so dass die äussere Hülle des Formkörpers bereits ausgehärtet ist, während in seinem Inneren noch ungehärtetes Harz vorhanden ist. Bei der Härtung des Harzes im Inneren des Formkörpers schwindet dieses, aber weil die Oberfläche bereits erstarrt ist, kann kein Harz mehr nachfliessen. Infolgedessen treten Schwundmarkierungen und Einfallstellen am Formkörper auf.

Aufgabe der Erfindung ist es nun, ein Reaktionsspritzgussverfahren zur Verfügung zu stellen, mit dessen Hilfe Formkörper aus monomeren, oligomeren oder polymeren Reaktionsharzen, die langsam oder auch schnell zu Duroplasten härten und gegebenenfalls Füllstoffe enthalten, hergestellt werden können, wobei gegebenenfalls Verstärkungsmaterialien, wie Glasfasern oder Gewebe, in die Form eingelegt werden können, ohne dass Schwundmarkierungen und Einfallstellen am Formkörper auftreten.

Es wurde gefunden, dass diese Aufgabe durch die im Kennzeichen des Anspruchs 1 angegebene erfindungsgemässe Massnahme gelöst werden kann. Mit dieser Arbeitsweise ist es möglich, das abschwindende Harzvolumenn während des Härtungsvorganges über den gesamten Formkörper durch Nachdrücken von Masse zu kompensieren und dadurch Einfallstellen und andere Schwundmarken zu vermeiden. Weiter wurde nachgewiesen, dass die kühlere Formhälfte den grössten Teil der Exothermie aufnimmt und die Massetemperatur niemals die Temperatur der heisseren Formhälfte überschreitet. Dadurch sind höhere Ausgangstemperaturen der Masse anwendbar.

Das erfindungsgemässe Verfahren ist im Patentanspruch 1 beschrieben, bevorzugte und besonders zweckmässige Ausführungsformen des Verfahrens sind in den Patentansprüchen 2 bis 10 definiert. Eine Vorrichtung zur Durchführung des neuen Verfahrens ist im Patentanspruch 11, eine bevorzugte Ausführungsform im Patentanspruch 12 beschrieben.

In DE-A-3 325 828 ist eine Spritzgiessvorrichtung beschrieben, bei der die Giessform u.a. eine Formplatte und eine von dieser abhebbare Düsenplatte aufweist. Die Formplatte enthält Formnester, und die Düsenplatte enthält Zufuhrkanäle (Düsen), welche in die Formnester münden. Die Kontaktflächen zwischen Form- und Düsenplatten sind auf kleinste Bereiche unmittelbar um die Eintrittsdüsen beschränkt. Die Düsenplatte wird bei dieser bekannten Vorrichtung zwar auf einer tieferen Temperatur gehalten als die Formplatte, jedoch liegt hier im Unterschied zur Erfindung keine zweiteilige sondern eine einteilige Form vor, wobei die Temperatur in der Formplatte und damit in der genannten einteiligen Form konstant und überall gleich ist.

Wie vorstehend erwähnt, ist es auch bei Formgebungsverfahren mit zwei- oder mehrteiligen Formen üblich, beide bzw. alle Formteile auf der gleichen, konstanten Temperatur zu halten. Durch die erfindungsgemässe Massnahme ist es überraschenderweise möglich, einwandfreie Formkörper herzustellen, die alle Einzelheiten der Oberflächen der beiden Formhälften genauestens wiedergeben. Die Temperaturdifferenz zwischen den beiden Formhälften beträgt 40 bis 180°C, vorzugsweise bis 120°C.

Als Duroplaste kommen für das erfindungsgemässe Verfahren von den eingangs erwähnten Kunststoffen vor allem Epoxidharze und ungesättigte Polyesterharze, wie Palatal P8 oder Palatal E 200 der BASF, sowie Mischungen derselben, in Betracht.

Man kann z.B. folgendermassen vorgehen:

Reaktionsharze und Härter werden getrennt temperiert und dann miteinander gemischt. Gegebenenfalls werden auch Füllstoffe eingemischt. Das Gemisch wird dann entlüftet, z.B. im Hochvakuum, und darauf mit einer Einfülltemperatur von 50 bis 150°C, vorzugsweise 50 bis 60°C in die Form gespritzt. Die Form kann ein Verstärkungsmaterial enthalten, z.B. in einer Menge von 60 bis 70 Gew.-%, bezogen auf das Gemisch von Reaktionsharz, Härter und Füllstoff. Man hält den Spritzdruck beim Nachdrücken von Masse während der ganzen Härtung aufrecht oder variiert ihn, um den Schwund an Volumen zu kompensieren. Ferner sorgt man dafür, dass der Forminnendruck vor dem Gelierpunkt einen Mindestwert, z.B. 10 bis 60 bar, vorzugsweise 25 bar, nicht unterschreitet, so dass durch Nachdrücken von Masse ein grosser Teil des nach dem Gelierpunkt auftretenden Volumenschwundes vorweggenommen und bereits im flüssigen Zustand kompensiert wird.

Es wurde dabei gefunden, dass unerwartet, trotz der erfindungsgemäss einzuhaltenden beträchtlichen Temperaturdifferenz zwischen den beiden Formhälften die Temperatur der Masse im Inneren der Reaktionskammer, also die Härtungstemperatur, nur um etwa 2 bis 5 Celsiusgrade unterhalb der Temperatur der höher zu beheizenden Formhälfte liegt und im wesentlichen an allen Stellen des Formkörpers gleich ist.

Auf der Innenseite der unteren Formhälfte, an der die anliegende Schicht der härtbaren Masse infolge der höheren Temperatur zuerst ausgehärtet wird, befindet sich dann auch negative musikalische oder alphanumerische Information, die gegebenenfalls in die anliegende Plattenschicht bei der Herstellung mit eingeformt wird.

Die Erfindung wird nun anhand der Zeichnung erläutert, in der ein Ausführungsbeispiel der erfindungsgemässen Vorrichtung dargestellt ist. Es zeigen:

Fig. 1 schematisch eine Vorrichtung gemäss der Erfindung und

Fig. 2 schematisch ein Formwerkzeug für die Vorrichtung gemäss der Erfindung.

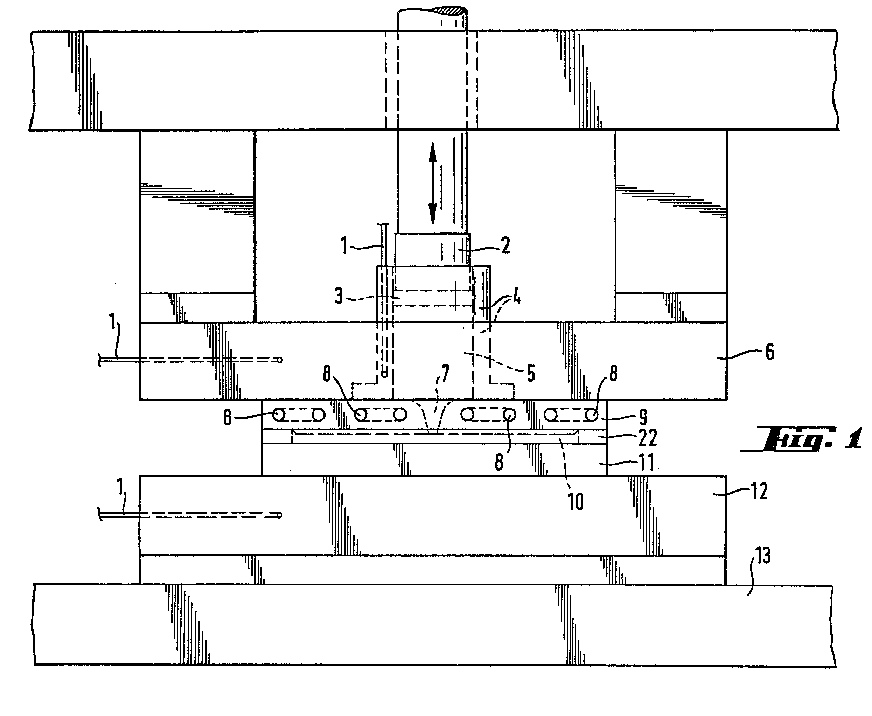

Fig. 1 zeigt eine modifizierte handelsübliche Transferpresse (Spritzpresse) des Typs KHC-50 der Firma Bucher-Guyer in Niederweningen (Schweiz) mit regelbarem Einspritz- und steuerrbarem Schliessdruck. Die Temperaturmessstellen im Transferzylinder 4, in der oberen Heizplatte 6 und in der unteren Heizplatte 12 der Presse sind mit 1 bezeichnet. Der Transferkolben ist mit 2, eine Dichtung mit 3, der Transferraum mit 5 und die Einspritzöffnung mit 7 bezeichnet. Das Formwerkzeug besteht aus der oberen Formhälfte 9, die mit einer Einspritzöffnung 7 versehen ist, und der unteren Formhälfte 11; zwischen den Formhälften 9 und 11 wird der Formkörper 10 gebildet. Die obere Formhälfte 9 ist mit Heizschlangen 8 versehen, durch die Öl zirkuliert. Die untere Formhälfte 11 wird durch die Heizplatte 12 der Presse beheizt, die auf dem Presstisch 13 ruht. Der Distanzrahmen zwischen den beiden Formhälften ist mit 22 bezeichnet.

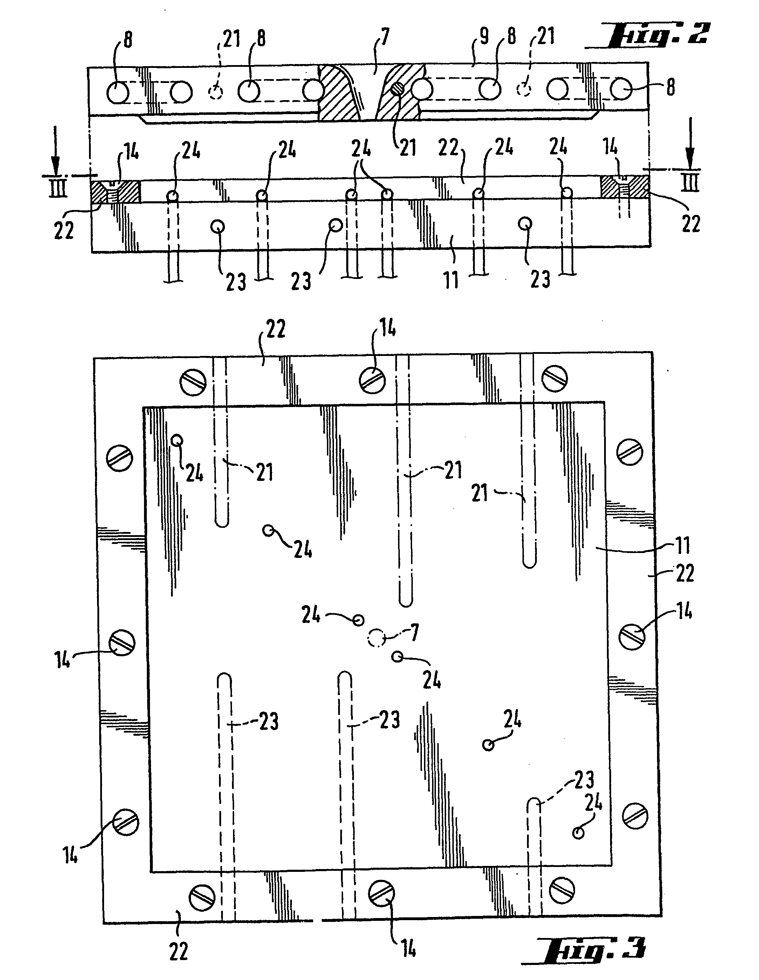

Fig. 2 zeigt das Formwerkzeug für die in Fig. 1 dargestellte Transferpresse. Gleiche Teile sind mit den gleichen Bezugsziffern wie in Fig. 1 bezeichnet. Die Temperatur der oberen Formhälfte 9 wird mit Thermoelementen 21 gemessen. Zwischen den beiden Formhälften 9 und 11 befindet sich der auf die untere Formhälfte 11 aufgeschraubte Distanzrahmen 22. Die Thermoelemente 23 dienen zur Messung der Temperatur der unteren Formhälfte. Mit den Thermofühlern 24 wird die Massetemperatur über das ganze Formkörpervolumen gemessen.

Mit der in den Fig. 1 und 2 dargestellten Vorrichtung wurden Beispiele mit zwei Glycidylgruppen enthaltendem Bisphenol A, einem heisshärtenden Epoxidharz (Araldit GY 250 der Ciba-Geigy AG, Basel), und hydriertem Dimethyldiaminodiphenylmethan als Härter (Laromin C-260 der Badischen Anilin- und Sodafabrik (BASF) AG, D-6700 Ludwigshafen/Rhein), sowie mit anhydrid- bzw. katalytisch gehärteten Epoxidsystemen und ungesättigten Polyesterharzen ausgeführt.

Die Beispiele wurden mit Temperaturdifferenzen zwischen den Formhälften von 40 bis 120°C durchgeführt, wobei die von der Einlassöffnung abgewandte Formhälfte auf der erforderlichen Härtungstemperatur gehalten wird.

Wenn die Formkörper nach dem Abkühlen keine gute Oberfläche zeigten, wurde die Temperatur der oberen Formhälfte gesenkt, bis die Formkörper gut aussahen.

Bei den weiter unten beschriebenen Beispielen und Vergleichsbeispielen wurden folgende Bedingungen konstant gehalten:

Schliessdruck:   60 bar
Einspritzdruck:  10 bar.

Der Innendruck im Werkzeug liegt anfänglich bei ca. 35 bar und nimmt im Verlauf der Härtung einige, z.B. 5-7 bar ab. Die Einspritzgeschwindigkeit wurde so gewählt, dass die Form innerhalb von ca. 15 Sekunden gefüllt war. Es wurde als Trennmittel ein Gemisch von Silikoneöl (vorzugsweise von ca. 5000 cP) mit Sangayol im Gewichtsverhältnis 49:51 verwendet.

Harz und Härter wurden im Umlufttrockenschrank auf die gewünschte Einfülltemperatur von 50 bis 150°C, vorzugsweise von 50 bis 60°C temperiert. Sie wurden, gegebenenfalls nach Zusatz von Füllstoff, gerührt, bis eine homogene Mischung erhalten wurde. Dann wurde wie üblich eine geringe Menge Silikone-Entschäumer zugesetzt und nochmals gerührt, bis die Mischung homogen war.

Die so erhaltene Mischung wurde unter Vakuum so lange entlüftet, bis kein Aufschäumen mehr feststellbar war.

Um die gewählten Temperaturdifferenzen einhalten zu können, wurde die Form kurz vor dem Einspritzen zusammengebaut und unter den Schliessdruck gesetzt. Zwischen die Form und den Transferraum 5 wurde ein Filterpapier eingebracht, damit die Mischung aus Harz, Härter und gegebenenfalls Füllstoff erst beim Anstieg des durch den Spritzkolben ausgeübten Druck in die Form eintritt und erst dann der Härtungstemperatur ausgesetzt wird. Das Filterpapier kann aber auch weggelassen bzw. durch die übliche Verschlusseinrichtung ersetzt werden.

Die Mischung aus Harz, Härter und gegebenenfalls Füllstoff und weiteren Zusatzstoffen wie Netzmitteln und Entformungsmitteln wurde in den Transferraum 5 gegossen, der dann mit einem Silikonkautschukstopfen verschlossen wurde. Mittels des Spritzkolbens 2 wurde die Mischung in die Form eingespritzt. Nachdem die Form gefüllt war, wurde ein in üblicher Weise aus den Kenndaten des Harzes errechneter Spritzdruck während des gesamten Härtungsvorganges aufrechterhalten.

Nach der Härtung wurde der Druck weggenommen und der Formkörper entformt. Falls er noch weich war, d.h., falls die Massetemperatur höher war als die Glasumwandlungstemperatur, wurde er in einer Kühllehre abgekühlt. Nach dem Abkühlen wurde die Oberfläche des Formkörpers beurteilt.

Es wurden entsprechend den Dimensionen der Reaktionskammer der Form Platten mit einer Oberfläche von 200 mm × 200 mm und einer Höhe von 4 mm erhalten. Die beiden Formhälften bestanden aus poliertem Werkzeugstahl.

In den folgenden Tabellen sind 3 Versuchsreihen, die Vergleichsbeispiele und erfindungsgemässe Beispiele umfassen, zusammengefasst. Dabei wurden folgende Abkürzungen verwendet:

| | |
|---|---|
| B. | erfindungsgemässes Beispiel |
| V.B. | Vergleichsbeispiel |
| $T_{wu}$ (°C) | Temperatur der unteren Formhälfte |
| $T_{wo}$ (°C) | Temperatur der oberen Formhälfte |
| $\triangle T_w$ (Celsiusgrade) | Differenz der Temperaturen der beiden Formhälften |
| $T_{max,u}$ (°C) | maximale Massetemperatur unten |
| $T_{max,o}$ (°C) | maximale Massetemperatur oben |
| $\triangle T_{max}$ (Celsiusgrade) | Differenz der maximalen Massetemperatur oben und unten |
| Komp. Volumen (%) | Nach dem Einfüllen der Masse kommt der Spritzkolben zum Stillstand, senkt sich aber nach Einsetzen der Reaktion noch weiter. Aus diesem zusätzlichen Kolbenweg und der Kolbenfläche kann man berechnen, welcher Prozentsatz, bezogen auf das Volumen des Formkörpers, kompensiert wurde. |
| Gewicht (g) | Gewicht des Formkörpers (der Platte) nach dem Abkühlen |
| Aspekt | Aussehen des Formkörpers (der Platte) nach dem Abkühlen |

Der «Aspekt» wurde folgendermassen beurteilt:

| | |
|---|---|
| + + | der Formkörper weist eine einwandfreie Oberfläche auf |
| + | der Formkörper weist wenig Schwundmarkierungen auf |
| – | der Formkörper weist viele Schwundmarkierungen auf und hat zudem noch Einfallstellen |
| – – | der Formkörper weist viele Schwundmarkierungen sowie Einfallstellen auf und ist zudem noch überspritzt. |

*1. Versuchsreihe*

Es wurden Formkörper aus dem heisshärtenden Epoxidharzsystem Araldit GY 250/Laromin C-260, das als Füllstoff Quarzgutmehl EL 45 der Firma Sihelco AG, Birsfelden, Schweiz, enthielt, hergestellt. Dabei wurden folgende Bedingungen eingehalten:

Harz: 153 g
Härter: 49 g
Füllstoff: 248 g
―――――
450 g

2-Nitropropan, als Entschäumer: 0,3 g
Einfülltemperatur: 50 bis 60°C

Die Versuchsreihe ist in Tabelle I zusammenge-fasst.

### TABELLE I

| | $T_{wu}$ (°C) | $T_{wo}$ (°C) | $\triangle T_w$ (C-Grade) | $T_{max,u}$ (°C) | $T_{max,o}$ (°C) | $\triangle T_{max}$ (C-Grade) | Komp. Vol. (%) | Gewicht (g) | Aspekt |
|---|---|---|---|---|---|---|---|---|---|
| V.B. 1 | 155 | 155 | 0 | 158,3 | 159,4 | (–) 1,1 | – | 241,3 | + |
| V.B. 2 | 165 | 165 | 0 | 168,2 | 168,4 | (–) 0,2 | 1,8 | 241,2 | + |
| B. 1 | 200 | 135 | 65 | 195,3 | 192,7 | 2,6 | 3,06 | 241,8 | + + |
| B. 2 | 200 | 145 | 55 | 195,7 | 193,3 | 2,4 | 2,73 | 241,5 | + + |
| B. 3 | 200 | 155 | 45 | 197,7 | 195,7 | 2,0 | 2,14 | 240,5 | + |
| B. 4 | 200 | 165 | 35 | 200,0 | 198,6 | 1,4 | 1,85 | 239,4 | – – |
| B. 5 | 200 | 175 | 25 | 201,8 | 200,8 | 1,0 | 1,33 | 239,2 | – – |

Aus der Tabelle I ist ersichtlich, dass bei den Vergleichsbeispielen 1 und 2, bei denen die Differenz der Temperaturen der beiden Formhälften gleich Null ist, der Schwund gar nicht (bei $T_{wu}$ = $T_{wo}$ = 155°C) oder nur zu einem geringen Teil (bei $T_{wu}$ = $T_{wo}$ = 165°C) kompensiert wird und der «Aspekt» unbefriedigend ist. Dabei ist es auch nachteilig, dass die Härtung wegen der niedrigeren Temperaturen langsam verläuft.

Aus den erfindungsgemässen Beispielen 1 bis 3 geht hervor, dass die Resultate umso besser sind, je grösser die Temperaturdifferenz zwischen den beiden Formhälften ist. Bei den höheren Temperaturdifferenzen wird sowohl ein grösserer Teil des Schwundes kompensiert als auch ein besserer «Aspekt» erhalten. Bei den Vergleichsbeispielen 4 und 5, bei denen die Temperaturdifferenz weniger als 40 Celsiusgrade beträgt, sind die Ergebnisse schlechter als bei den Vergleichsbeispielen 1 und 2.

### 2. Versuchsreihe

Es wurden Formkörper aus dem heisshärtenden Epoxidharzsystem Araldit GY 250/Laromin C-260, das keinen Füllstoff enthielt, hergestellt. Dabei wurden folgende Bedingungen eingehalten:

Harz: 265 g
Härter: 85 g
―――――
350 g
2-Nitropropan: 0,3 g
Einfülltemperatur: 50 bis 60°C

Die Versuchsreihe ist in Tabelle II zusammengefasst.

### TABELLE II

| | $T_{wu}$ (°C) | $T_{wo}$ (°C) | $\triangle T_w$ (C-Grade) | $T_{max,u}$ (°C) | $T_{max,o}$ (°C) | $\triangle T_{max}$ (C-Grade) | Komp. Vol. (%) | Gewicht (g) | Aspekt |
|---|---|---|---|---|---|---|---|---|---|
| V.B. 3 | 120 | 120 | 0 | 122,2 | 122,7 | (–) 0,5 | 4,24 | 175,0 | – |
| V.B. 4 | 130 | 130 | 0 | 133,4 | 134,0 | (–) 0,6 | 3,36 | 174,6 | – |
| V.B. 5 | 140 | 140 | 0 | 143,0 | 143,3 | (–) 0,3 | – | 174,4 | – |
| V.B. 6 | 150 | 150 | 0 | 152,3 | 152,8 | (–) 0,5 | 2,8 | 173,7 | – – |
| V.B. 7 | 160 | 160 | 0 | 161,4 | 162,3 | (–) 0,9 | 2,06 | 173,8 | – – |
| V.B. 8 | 180 | 180 | 0 | 179,5 | 182,0 | (–) 2,5 | 2,38 | – | – – |
| V.B. 9 | 200 | 200 | 0 | 193,0 | 195,5 | (–) 2,5 | 0,45 | – | – – |
| V.B. 10 | 220 | 220 | 0 | 209,8 | 223,5 | (–) 3,7 | 1,26 | – | – – |
| B. 6 | 200 | 117 | 83 | 196,2 | 192,4 | 3,8 | 3,23 | 175,3 | + + |
| B. 7 | 200 | 127 | 73 | 199,2 | 196,7 | 2,5 | 3,18 | 174,7 | + + |
| B. 8 | 200 | 136 | 64 | 200,6 | 198,4 | 2,2 | 2,26 | 174,6 | + + |
| B. 9 | 200 | 147 | 53 | 200,5 | 198,8 | 1,7 | 2,2 | 173,5 | – |
| B. 10 | 200 | 160 | 40 | 202,6 | 201,2 | 1,4 | 2,03 | 173,0 | – – |
| B. 11 | 200 | 170 | 30 | 202,2 | 202,8 | (–) 0,6 | 0,56 | 172,5 | – – |

Aus Tabelle II ist ersichtlich, dass bei den Vergleichsbeispielen 3 bis 7, bei denen die Differenz der Temperaturen der beiden Formhälften gleich Null ist, zwar (mit Ausnahme des Vergleichsbeispiels 3) eine ähnliche Kompensation des Schwundes erzielt wird wie in den erfindungsgemässen Beispielen 1 bis 5, dass der «Aspekt» aber unbefriedigend ist, besonders bei höheren Temperaturen der beiden Formhälften, die an sich wegen der höheren Härtungsgeschwindigkeiten erwünscht wären.

Die erfindungsgemässen Beispiele 6 bis 8 zeigen wiederum, dass die Ergebnisse sowohl hinsichtlich der Kompensation des Schwundes als auch hinsichtlich des «Aspektes» bei höheren Temperaturdifferenzen zwischen den beiden Formhälften besser sind. Bei den Vergleichsbeispielen 9 bis 11, bei denen die Temperaturdifferenz 53 Celsiusgrade oder weniger beträgt, sind die Ergebnisse nicht besser als bei den Vergleichsbeispielen 3 bis 7.

### 3. Versuchsreihe

Es wurden Formkörper aus dem kalthärtenden Epoxidharzsystem Araldit GY 250/Amino-ethyl-piperazin, das keinen Füllstoff enthielt, hergestellt. Dabei wurden folgende Bedingungen eingehalten:

| | |
|---|---|
| Harz: | 284 g |
| Härter: | 66 g |
| | 350 g |
| 2-Nitropropan: | 0,3 g |
| Einfülltemperatur: | ca. 30°C |

Die Versuchsreihe ist in Tabelle III zusammengefasst.

### TABELLE III

| | $T_{wu}$ (°C) | $T_{wo}$ (°C) | $\triangle T_w$ (C-Grade) | $T_{max,u}$ (°C) | $T_{max,o}$ (°C) | $\triangle T_{max}$ (C-Grade) | Komp. Vol. (%) | Gewicht (g) | Aspekt |
|---|---|---|---|---|---|---|---|---|---|
| V.B. 11 | 120 | 120 | 0 | 126,0 | 129,5 | (–) 3,5 | 1,92 | 180,4 | – |
| V.B. 12 | 130 | 130 | 0 | 134,3 | 137,7 | (–) 3,4 | 0,73 | 180,9 | – – |
| B. 12 | 130 | 100 | 30 | 133,6 | 137,0 | (–) 3,4 | 0,67 | 182,6 | – – |
| B. 13 | 130 | 70 | 60 | 129,6 | 1335,0 | (–) 5,4 | 4,37 | 184,7 | – |
| B. 14 | 130 | 50 | 80 | 133,1 | 134,6 | (–) 1,5 | – | 184,0 | – |
| B. 15 | 130 | 40 | 90 | 129,7 | 130,9 | (–) 1,2 | 4,87 | 185,4 | – |
| B. 16 | 130 | 25 | 105 | 131,0 | 131,0 | 0 | 4,91 | 186,0 | + + |
| B. 17 | 120 | 50 | 70 | 121,4 | 122,5 | (–) 1,1 | 4,87 | 185,9 | – |
| B. 18 | 120 | 30 | 90 | 120 | 120 | 0 | 4,95 | 186,3 | + + |
| B. 19 | 140 | 25 | 115 | 136,9 | 136,0 | 0,9 | 3,59 | 185,5 | + + |

Aus der Tabelle III geht hervor, dass bei den Vergleichsbeispielen 8 und 9, bei denen die Differenz der Temperaturen der beiden Formhälften gleich Null ist, nur ein verhältnismässig geringer Teil des Schwundes kompensiert wird und der «Aspekt» unbefriedigend ist.

Aus den erfindungsgemässen Beispielen 12 bis 19 ist ersichtlich, dass die Temperaturdifferenzen zwischen den beiden Formhälften bei kalthärtenden Systemen erheblich grösser sein müssen als bei heisshärtenden (Härtungstemperatur ca. 200°C). Für die Versuche wurde das kalthärtende System, das auch bei Raumtemperatur härten kann, bei 120 bis 140°C gehärtet. Gute Resultate hinsichtlich des «Aspektes» werden bei Temperaturen der unteren Formhälfte von 120, 130 bzw. 140°C nur bei Temperaturdifferenzen von 90, 105 bzw. 115 erhalten. Der Schwund wird hingegen schon bei niedrigeren Temperaturdifferenzen in erheblichem Umfang kompensiert.

### Beispiel 20

In diesem Beispiel wurden Formkörper aus dem heisshärtenden Epoxidharzsystem Araldit GY 250/Laromin C-260 hergestellt, wobei ein Glasgewebe in die Form gegeben und mit dem Epoxidharzsystem imprägniert wurde. Es wurden folgende Bedingungen eingehalten:

| | |
|---|---|
| Harz: | 227 g |
| Härter: | 73 g |
| Glasgewebe (12 Lagen): | 184,8 g |
| Entschäumer: | 0,3 g |
| Einfülltemperatur: | 50 bis 60°C |

Folgende Parameter wurden gemessen:

| | |
|---|---|
| $T_{wu}$ (°C) | 200 |
| $T_{wo}$ (°C) | 135 |
| $\triangle T_w$ Celciusgrade | 65 |
| $T_{max,u}$ (°C) | 197,5 |
| $T_{max,o}$ (°C) | 193,2 |
| $\triangle T_{max}$ Celciusgrade | 4,3 |
| Komp. Volumen (%) | 2,17 |
| Gewicht | 238,6 |
| Aspekt | + + |

Die erhaltenen Platten haben eine einwandfreie Oberfläche und die folgenden Eigenschaften:

Biegeversuch (DIN 53 452)     918,5 N/mm²,

was den besten Werten von im Handel befindlichen Platten entspricht.

In der gleichen Weise lassen sich Platten mit einer Dicke von 10 mm anstelle von 4 mm herstellen.

Die erhaltenen Platten haben eine einwandfreie Oberfläche und zeigen keine Lufteinschlüsse. Die Biegefestigkeit mit diesem Glasgewebe muss als vorzügliches Resultat gewertet werden.

Mit dem neuen Verfahren ist es auch möglich, Platten von noch grösserer Dicke mit gleich hohem Glasgehalt und einwandfreier Qualität herzustellen.

## Patentansprüche

1. Reaktionsspritzpressverfahren zur Herstellung von Formkörpern aus Duroplasten, die gegebenenfalls Füllstoffe und/oder Verstärkungsmaterialien enthalten, ausgehend von Reaktionsharzen unter Verwendung einer zweiteiligen Form, deren beide Formhälften im wesentlichen die gleiche Oberfläche besitzen, wobei eine Formhälfte mit einer Einlassöffnung für das Reaktionsharz ausgestattet ist, dadurch gekennzeichnet, dass man die die Einlassöffnung für das Reaktionsharz aufweisende Formhälfte auf einer tieferen Temperatur hält als die andere Formhälfte.

2. Verfahren nach Anspruch 1, dadurch gekennzeichnet, dass die Temperaturdifferenz zwischen den beiden Formhälften 40 bis 180°C, vorzugsweise 60 bis 120°C beträgt.

3. Verfahren nach Anspruch 1 oder 2, dadurch gekennzeichnet, dass man Formkörper aus Harnstoff-Formaldehyd-Harzen, Melamin-Formaldehyd-Harzen, Phenol-Formaldehyd-Harzen, vorzugsweise aber aus Epoxidharzen, Polyurethanharzen oder ungesättigten Polyesterharzen, herstellt.

4. Verfahren nach einem der Ansprüche 1 bis 3, dadurch gekennzeichnet, dass man Reaktionsharz und Härter getrennt temperiert, z.B. auf eine Einfülltemperatur von 50 bis 150°C, vorzugsweise 50 bis 60°C, und dann homogen miteinander mischt.

5. Verfahren nach Anspruch 4, dadurch gekennzeichnet, dass man dem Gemisch von Reaktionsharz und Härter einen Füllstoff zumischt, z.B. in einer Menge von bis zu 60 Gew.-%, bezogen auf die Summe von Reaktionsharz, Härter und Füllstoff.

6. Verfahren nach Anspruch 4 oder 5, dadurch gekennzeichnet, dass man das Gemisch von Reaktionsharz, Härter und gegebenenfalls Füllstoff entlüftet, z.B. im Hochvakuum.

7. Verfahren nach einem der Ansprüche 4 bis 6, dadurch gekennzeichnet, dass man das Gemisch von Reaktionsharz, Härter und gegebenenfalls Füllstoff in die Form spritzt, die gegebenenfalls Verstärkungsmaterial enthält.

8. Verfahren nach Anspruch 7, dadurch gekennzeichnet, dass die Form 60 bis 70 Gew.-% Verstärkungsmaterial, bezogen auf das Gemisch von Reaktionsharz und Härter, enthält.

9. Verfahren nach einem der Ansprüche 1 bis 8, dadurch gekennzeichnet, dass man den Spritzdruck während der ganzen Härtung aufrechterhält bzw. variiert, um abgeschwundene Masse zu kompensieren.

10. Verfahren nach Anspruch 9, dadurch gekennzeichnet, dass der Forminnendruck vor dem Gelierpunkt einen Mindestwert, z.B. 10 bis 60 bar, vorzugsweise 25 bar, nicht unterschreitet, so dass durch Nachdrücken von Masse ein grosser Teil der Schwindung nach dem Gelierpunkt vorweggenommen und bereits im flüssigen Zustand kompensiert wird.

11. Vorrichtung zur Durchführung des Verfahrens nach einem der Ansprüche 1 bis 10, dadurch gekennzeichnet, dass diejenige Formhälfte (9), die die Einlassöffnung für das Reaktionsharz enthält, mit Mitteln (8) zum getrennten Beheizen und gegebenenfalls Kühlen versehen ist.

12. Vorrichtung nach Anspruch 11, dadurch gekennzeichnet, dass die Mittel (8) zum getrennten Beheizen und gegebenenfalls Kühlen Heizschlangen sind, durch die Öl zirkuliert.

## Claims

1. Pressure reaction injection moulding process for manufacturing moulded bodies of thermoset materials which optionally contain fillers and/or reinforcing agents, starting with thermosetting resins using a two-part mould, the two half moulds of which essentially have the same surface, one half mould being equipped with an inlet opening for the thermosetting resin, characterised in that the half mould having the inlet opening for the thermosetting resin is kept at a lower temperature than the other half mould.

2. Process according to Claim 1, characterised in that the temperature difference between the two half moulds is 40 to 180°C, preferably 60 to 120°C.

3. Process according to Claim 1 or 2, characterised in that moulded bodies of urea-formaldehyde resins, melamine-formaldehyde resins, phenol-formaldehyde resins, but preferably of epoxide resins, polyurethane resins or unsaturated polyester resins, are produced.

4. Process according to one of Claims 1 to 3, characterised in that the thermosetting resin and the hardening agent are separately heated, e.g. to a filling temperature of 50 to 150°C, preferably 50 to 60°C, and then homogeneously mixed with each other.

5. Process according to Claim 4, characterised in that a filler is mixed with the mixture of thermosetting resin and hardening agent, e.g. in a quantity of upt to 60% weight relative to the total of thermosetting resin, hardening agent and filler.

6. Process according to Claim 4 or 5, characterised in that the mixture of thermosetting resin, hardening agent and, optionally, filler is de-aerated, e.g. in a high vacuum.

7. Process according to one of Claims 4 to 6, characterised in that the mixture of thermosetting resin, hardening agent and, optionally, filler is injected into the mould, which optionally contains reinforcing agent.

8. Process according to Claim 7, characterised in that the mould contains 60 to 70% weight of reinforcing agent relative to the mixture of thermosetting resin and hardening agent.

9. Process according to one of Claims 1 to 8, characterised in that the injection pressure is maintained or varied during the entire hardening phase in order to compensate for loss of volume.

10. Process according to Claim 9, characterised in that the internal pressure in the mould, prior to the gelling point, does not fall below a minimum value, e.g. 10 to 60 bar, preferably 25 bar, so that a large proportion of the volume losses after the gelling point is anticipated by pressure-feeding additional material and is already compensated in the liquid state.

11. Apparatus for carrying out the process according to one of Claims 1 to 10, characterised in that the mould half (9) which contains the inlet opening for the thermosetting resin, is provided with means (8) for separately heating and optionally cooling.

12. Apparatus according to Claim 11, characterised in that said means (8) for separately heating and optionally cooling are heating coils through which oil circulates.

**Revendications**

1. Procédé de moulage par réaction-transfert pour la fabrication de pièces moulées en matières thermodurcissables, qui contiennent éventuellement des charges et/ou des matières de renforcement, à partir de résins réactives, avec un moule en deux parties dont les deux moitiés possèdent sensiblement la même surface, l'une des moitiés de moule étant pourvue d'une ouverture d'admission pour la résine réactive, caractérisé en ce que la moitié de moule comportant l'ouverture d'admission pour la résine réactive est maintenue à une température inférieure à celle de l'autre moitié de moule.

2. Procédé selon la revendication 1, caractérisé en ce que la différence de température entre les deux moitiés de moule est de 40 à 180°C, de préférence de 60 à 120°C.

3. Procédé selon la revendication 1 ou 2, caractérisé en ce que les pièces moulées sont fabriquées en résines urée-formaldéhyde, résines mélamine-formaldéhyde, ou résines phénol-formol, mais de préférence en résines époxy, résines polyurethane ou résines polyester non saturées.

4. Procédé selon l'une quelconque des revendications 1 à 3, caractérisé en ce que la résine réactive et le durcisseur sont chauffés séparément, par exemple à une température de remplissage de 50 à 150°C, de préférence 50 à 60°C, et mélangés ensuite de façon homogène.

5. Procédé selon la revendication 4, caractérisé en ce que l'on ajoute au mélange de résine réactive et de durcissement une charge, par exemple en une quantité allant jusqu'à 60 pour cent en poids par rapport à la somme de la résine réactive, du durcisseur et de la charge.

6. Procédé selon la revendication 4 ou 5, caractérisé en ce que l'on désaère le mélange de résine réactive, de durcisseur et éventuellement de charge, par exemple sous vide poussé.

7. Procédé selon l'une quelconque des revendications 4 à 6, caractérisé en ce que le mélange de résine réactive, de durcisseur et éventuellement de charge est injecté dans le moule qui contient le cas échéant une matière de renforcement.

8. Procédé selon la revendication 7, caractérisé en ce que le moule contient 60 à 70 pour cent en poids de matière de renforcement par rapport au mélange de résine réactive et de durcisseur.

9. Procédé selon l'une quelconque des revendications 1 à 8, caractérisé en ce que la pression d'injection est maintenue ou varie pendant toute la durée du durcissement, afin de compenser le retrait de la masse.

10. Procédé selon la revendication 9, caractérisé en ce que la pression intérieure du moule avant l'instant de gélification ne passe pas en-dessous d'une valeur minimale, par exemple 10 à 60 bar, de préférence 25 bar, de sorte que, par le maintien sous pression de la masse, une grande partie du retrait après l'instant de gélification soit anticipée et compensée déjà à l'état liquide.

11. Dispositif pour la mise en oeuvre du procédé selon l'une quelconque des revendications 1 à 10, caractérisé en ce que la moitié de moule (9) possédant l'ouverture d'admission pour la résine réactive est pourvue de moyens (8) pour un chaffage et le cas échéant un refroidissement séparés.

12. Dispostif selon la revendication 11, caractérisé en ce que les moyens (8) pour le chauffage et le cas échéant le refroidissement séparés sont des serpentins de chauffage dans lesquels circule de l'huile.

**Fig. 1**

*Fig. 2*

*Fig. 3*